# EUROPEAN PATENT APPLICATION

(11) **EP 4 066 953 A1**
(43) Date of publication of application: **05.10.2022**
(21) Application number: 22163133.6
(22) Date of filing: 21.03.2022
(51) Int. Cl.: B21C 23/32

(54) **DEVICE AND METHOD FOR LUBRICATING A HEATED METAL BILLET**

(30) Priority: 21.03.2021 IT 202100007100
(71) Applicant: Altea S.r.l., 25040 Monticelli Brusati (BS) (IT)
(72) Inventor: POGLIANI, Ambrogio, 25040 Monticelli Brusati (IT)
(74) Representative: Premru, Rok

(57) **Abstract**

Disclosed herein is a metallurgical plant for hot extrusion of a non-ferrous metal billet with a metallurgical process for hot extrusion of a non-ferrous billet.

## Description

A device and a method for lubricating a heated metal billet are disclosed therein.

Namely, there is disclosed a device for spraying a mixture of air and electrostatically charged lubricating powder material on a heated metal billet.

Also there is disclosed a method of spraying a mixture of air and electrostatically charged lubricating powder material on a heated metal billet.

The device and method as described below are used in plants and processes for hot extrusion of billets of non-ferrous metal material.

As used herein, hot extrusion relates to both direct and indirect extrusion.

As used herein, the term billet encompasses a steel product having a substantially and/or essentially cylindrical shape.

As used herein, a "non-ferrous metal material" encompasses aluminum alloys and copper alloys, namely brass alloys such as lead-free brass alloys.

Semi-finished metal products are known to be formed with solid or hollow shapes, using metallurgical processes known as "hot extrusion".

Hot extrusion of a metal billet is a metallurgical process that is specifically used in the production of semi-finished non-ferrous alloys, e.g. copper alloys such as brass.

In short, hot extrusion is an intermittent process in which a metal material, in the form of a billet, previously heated, undergoes a pushing or pulling action (by means of a press) and is thereby forced to flow through suitable ports which impart the desired cross-section to the metal.

Typically, the billet to be hot-extruded can have a length ranging from 1 to 4 meters and a diameter ranging from 0.18 to 0.5 meters.

Currently known hot extrusion processes still have a few drawbacks.

The purpose of the inventor is to suggest a solution to at least partially solve the problems of the prior art.

In general, one object of the inventor is to reduce the maintenance frequency of extrusion presses.

In particular, one object of the inventor is to reduce wear of the equipment required for the hot extrusion process (press container).

A further object of the inventor is to improve the quality of the products obtained from the hot extrusion process.

In order to fulfill the above discussed purposes and objects, the inventor provides a device which is intended to be installed in a metallurgical plant, for lubricating a heated billet prior to its introduction into the container of the extrusion press.

In order to fulfill the above discussed purposes and objects, the inventor also provides a method of lubricating a heated billet prior to the extrusion process.

Certain possible embodiments of a device for lubricating a heated metal billet prior to its extrusion will be now described with reference to the accompanying drawings in which:
- Figure 1 is a perspective view of a first embodiment of a billet lubricating device,

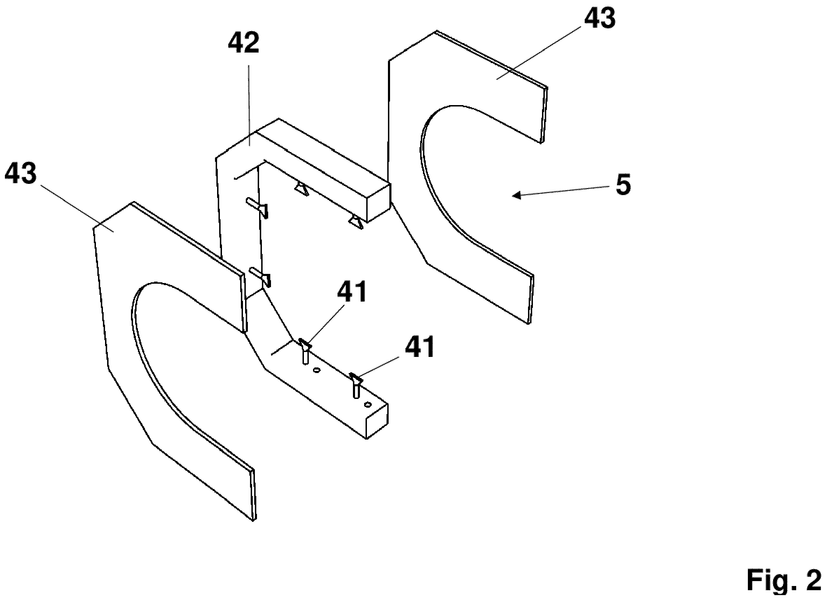

- Figure 2 is an exploded schematic view of a dispensing head as used in the lubrication system of Figure 1,

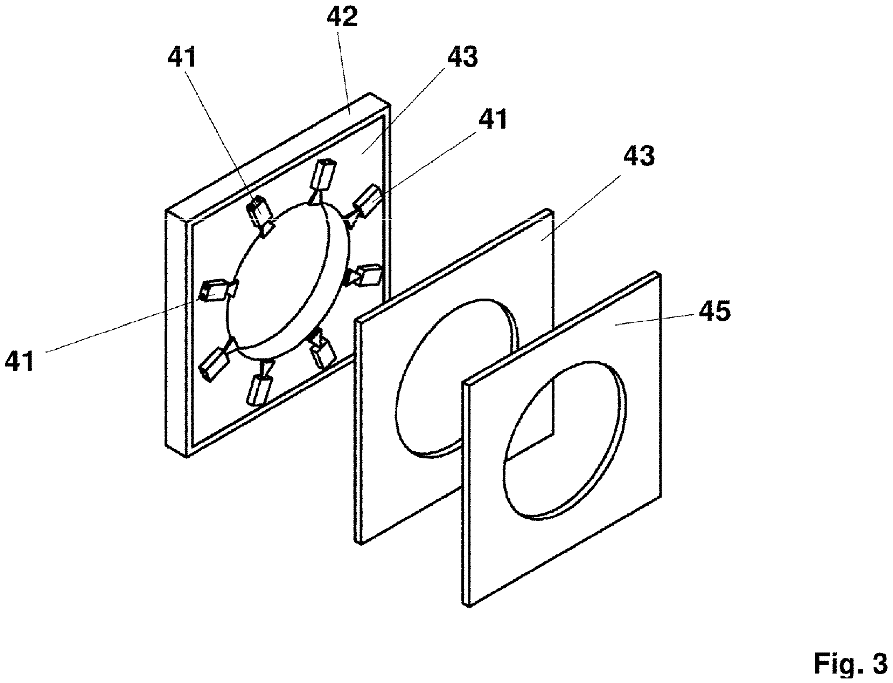

- Figure 3 is an exploded schematic view of an alternative embodiment of a dispensing head for a billet lubricating device,

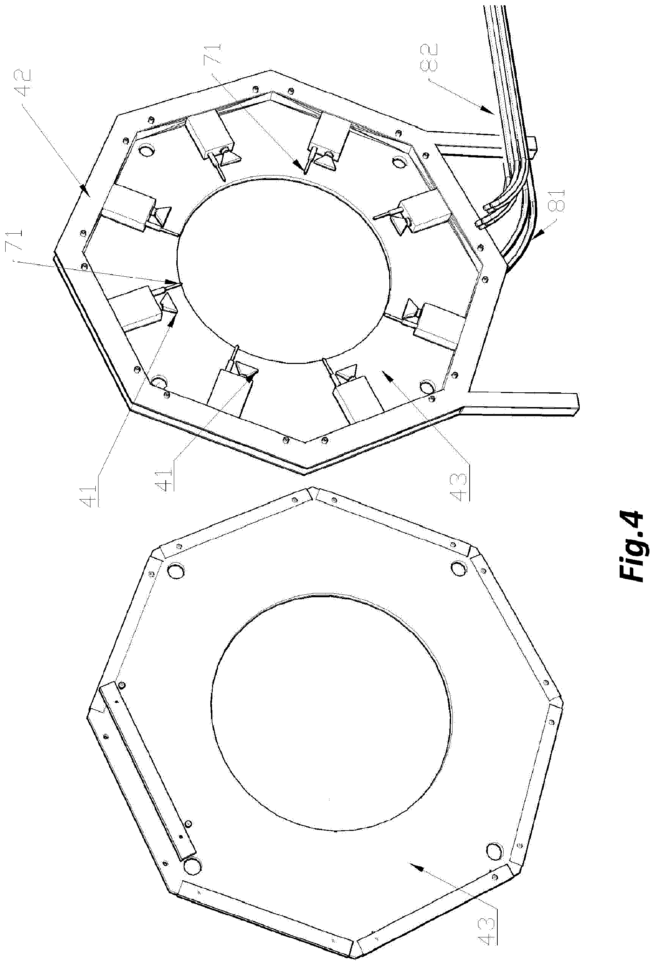

- Figure 4 is an exploded schematic view of a further embodiment of a dispensing head for a billet lubricating device,

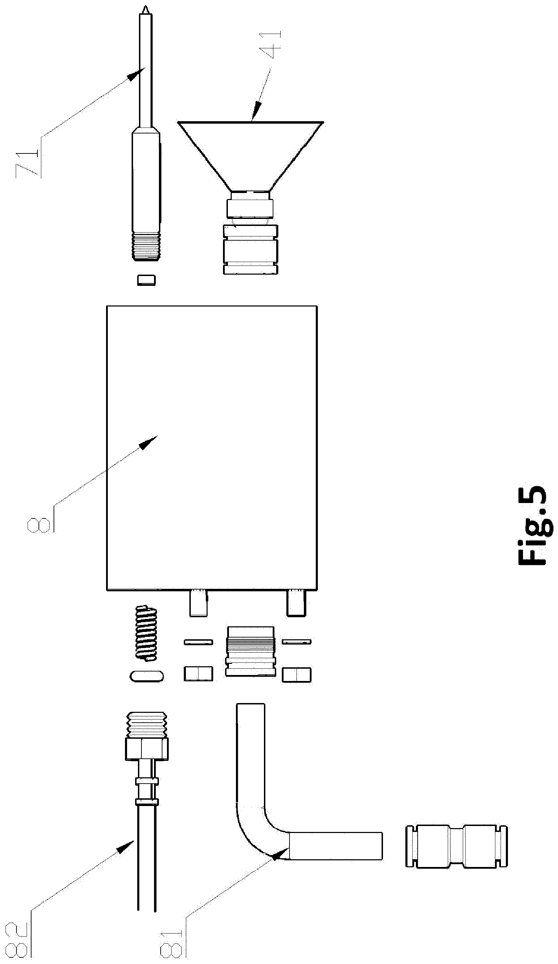

- Figure 5 is an exploded view of a detail of a dispensing head of a billet lubricating device, and
- Figure 6 shows a second embodiment of a device for lubricating metal billets when located at the outlet of a billet heating furnace.

Referring to the annexed drawings, numeral 1 schematically designates a billet lubricating device, namely an electrostatic spray lubrication device.

The lubrication device 1 is suitable for use in a metallurgical plant (not shown) to lubricate billets 3 made of non-ferrous metal material, suitably heated, prior to the hot extrusion process.

Typically, in the hot extrusion process the metal billet 3 is heated to a temperature approximately ranging from 50% to 80% of the melting temperature of the metal material.

The furnace 9 for heating metal billets may be a conventional induction furnace or a conventional gasfired furnace.

As explained below in further detail, the lubricating device 1 is adapted to spray, 41, ..., 41, a heterogeneous mixture of air and electrostatically charged lubricating powder material, through a plurality of converging nozzles 41, on the heated metal billet 3 while the latter is maintained at an electrical ground potential and is caused to axially flow through a space 5.

The lubricating device 1 comprises a conventional apparatus (not shown) for creating an air flow containing a powder material, a plurality of nozzles 41, 41, ..., 41 ejecting air and lubricating powder jets exit, and a conventional voltage generator (not shown) to electrostatically charge the powder lubricant that flows out of each nozzle, by means of suitable electrodes 71, 71, ..., 71.

The nozzles 41, 41, ..., 41 are pneumatically connected to the apparatus for creating an air flow containing a powder lubricant, to thereby create a plurality of jets of air added with powder lubricant.

Each nozzle 41, 41, ..., 41 has an electrode 71, 71, ...., 71 associated thereto and electrically connected to the voltage generator, for electrostatically charging the lubricating powder material that flows out of the nozzle.

The voltage generator is adapted to generate an adequate (DC negative) voltage which can attain values ranging, for example, from about 30 kVolt to about 100 kVolt.

The nozzles 41, 41, ..., 41 of the lubricating device 1 are oriented to converge toward the space 5, through which the billet 3 is intended to pass.

In particular, the nozzles 41, 41, ..., 41 of the device 1 may be oriented substantially and/or essentially orthogonal to the axial direction of movement X of the billet 3.

The lubricating device 1 also comprises a roller conveyor 21 to allow the billet 3 to move through the space 5 toward which the nozzles 41, 41, ..., 41 converge, with the jets of air and electrostatically charged lubricating powder flowing out of the nozzles.

The roller conveyor 21 is a straight roller conveyor and comprises a plurality of rollers 6, 6, ..., 6 aligned along a substantially and/or generally horizontal axis X.

The rollers 6, 6, ..., 6 of the roller conveyor 21 are metal rollers, for example steel rollers.

The roller conveyor 21 is electrically connected to the ground, so that the billet 3 that moves on the roller conveyor 21 through the space 5 is also kept at the ground potential.

That is, the process of depositing the lubricating powder material on the billet 3 is based on the principle of electrostatic attraction between charges of opposite sign.

Since the lubricating powder contained in the air jets from the nozzles 41, 41, ...41 is negatively charged, it tends to deposit on the surface of the billet 3 as the latter passes through the space 5.

In a possible embodiment, the steel rollers 6, 6, ..., 6 of the roller conveyor 21 have a substantially and/or generally concave profile (for example like those commercially known in Italy [UT1]as D-type roller supports or grooved roller supports).

The concave profile of the rollers 6, 6, ..., 6 ensures lateral retention of the billet 3 as the latter moves axially on the rollers.

The rollers 6, 6, ..., 6 of the roller conveyor 21 may be live rollers or idle rollers.

If the rollers 6, 6, ..., 6 of the roller conveyor are idle rollers, a hydraulic pushing member (not shown) or a pull clamp (not shown) may be provided to impart the axial motion to the metal billet 3.

In the illustrated example, the space 5 is adjacent to one of the ends of the roller conveyor 21.

This option is preferred because it allows the lubricating powder to be evenly sprayed over the entire circumference of the billet 3.

If needed, the roller conveyor 21 may be attached to a movable frame (not shown), which is able to translate and/or rotate.

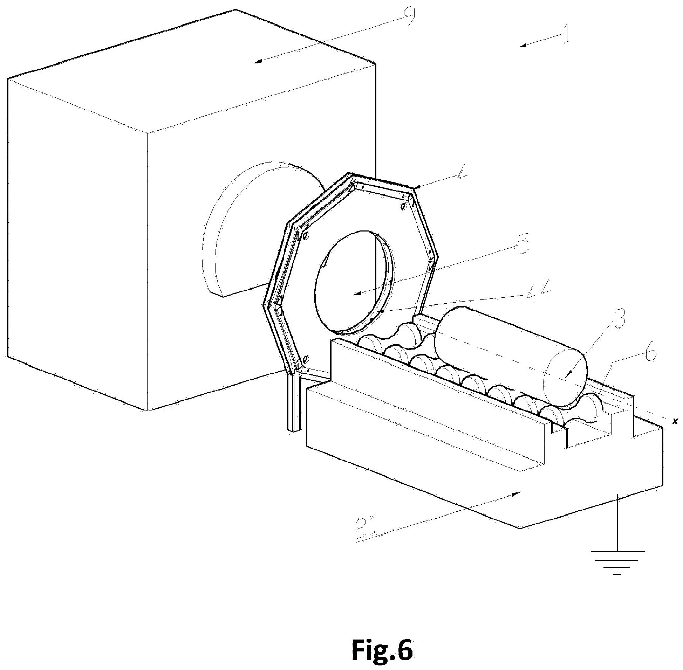

For example, in the embodiment of Figure 6, the roller conveyor 21 may be mounted to a carriage that can translate on a path comprising a loading station, for picking up the billet 3 that exits the furnace 9, and an unloading station, for discharging the billet 3 into a magazine for the extrusion press.

The number of nozzles 41, 41, ..., 41 of the lubricating device 1 varies, for example, as a function of the diameter of the billets 3 to be processed.

With billets 3 having a diameter ranging from 15 cm to 50 cm, the number of nozzles 41, 41, ..., 41 may range from three to eight.

In the illustrated embodiments, the nozzles 41, 41, ..., 41 are substantially and/or essentially coplanar and are placed on a vertical plane.

Due to the coplanar arrangement of the nozzles 41, 41, ..., 41, the space occupied by the lubricating device 1 and hence the space 5 required to lubricate the billet 3 can be minimized.

The nozzles 41, 41, ..., 41 may be distributed along an arc of a circle or over a circumference, for example at a constant angular pitch.

A circumferential distribution of the nozzles 41, 41, ..., 41 was found to afford a more homogeneous distribution of the powder on the surface of the billet 3.

In the illustrated embodiments, the nozzles 41, 41, ..., 41 are attached to at least one support 42, for example a metal support structure, whose shape may vary as needed.

In a possible embodiment, the support 42 may have an approximately arcuate shape, for example a substantially and/or generally "U" or "C" shape.

In other embodiments the support 42 may have a substantially circular or substantially polygonal, e.g. octagonal, shape.

In certain embodiments (not shown), the support 42 may comprise at least two distinct parts (each supporting a part of the nozzles) which may be joined prior to the billet 3 moving on the roller conveyor 21, to obtain a plurality of circumferentially distributed nozzles.

The nozzles 41, 41, ..., 41 are in such positions as to be able to direct the jets of air and electrostatically charged powder toward the space 5, which is inside the perimeter defined by the nozzles.

In certain possible embodiments, the nozzles 41, 41, ..., 41 are arranged between two elements 43, 43, for example two parallel plate-like elements 43, 43 made of a dielectric material.

For example, the two plate-like elements 43, 43 may consist of glass wool panels impregnated with petrifying varnishes.

The two plate-like elements 43, 43 define a slot 44, facing the space 5 and delimiting the space 5, from which the jets of air and electrostatically charged lubricating powder material are ejected.

This arrangement can provide a more homogeneous flow of air and powder on the billet 3.

The plate-like elements 43, 43 are believed to avoid electrostatic dispersion out of the lubricating powder material.

The plate-like elements 43, 43 are also believed to reduce the dispersion of powder lubricant due to the air flows generated by the heated billet.

The plurality of nozzles 41, 41, ...41, the support 42 and the plate-like elements 43, 43 form together a head 4 for dispensing the flow of air and electrostatically charged lubricating powder.

The slot 44 of the dispensing head 4 may extend around the space 5 with a substantially and/or generally and/or approximately arcuate or annular profile.

This arrangement further improves the deposition of the lubricating powder on the billet 3.

At least one outer panel 45 may be also possibly provided, made of a material that can effectively withstand high temperatures and having insulating properties, for improved protection of the dispensing head 4 and the nozzles 41, 41, ...41 in particular from the heat released by the billet 3.

In certain embodiments, the charge electrodes 71, 71, ..., 71 (which electrostatically charge the powder) are external electrodes, i.e. are located outside the nozzles 41, 41, ..., 41 so that the jet of air and powder from the nozzle can impinge thereupon.

This arrangement has been found to improve the quality of the lubrication process.

Furthermore, the external location of the electrodes 71 can reduce the thickness of the dispensing head 4.

In a possible embodiment, each nozzle 41 and each electrode 71 are connected to a dispensing body 8.

The dispensing body 8 is connected to an air and powder inflow duct 81 for the nozzle 41, and to an electric cable 82 for powering the corresponding electrode 71.

The support 42 of the nozzles 41, 41, ..., 41 may be stationary or movable as required.

In other words, the dispensing head 4 may be stationary or movable as required.

For example, the support 42 may be designed to be rigidly joined to the roller conveyor 21 (see Figure 6).

In this case, the dispensing head 4 can be located, for example, at the front of the roller track 1.

Alternatively, the support element 42 may be moved by suitable means, independent of the roller conveyor 21, such as a translating arm (not shown), to bring the head 4 to the working position when required.

In the illustrated examples the discharge nozzles 41, 41, ..., 41 are flat jet nozzles.

For example, such flat jet nozzles have an angle ranging from 50° to 90°.

Thus, the jet ejected from each nozzle tends to quickly expand and quickly reduce its speed.

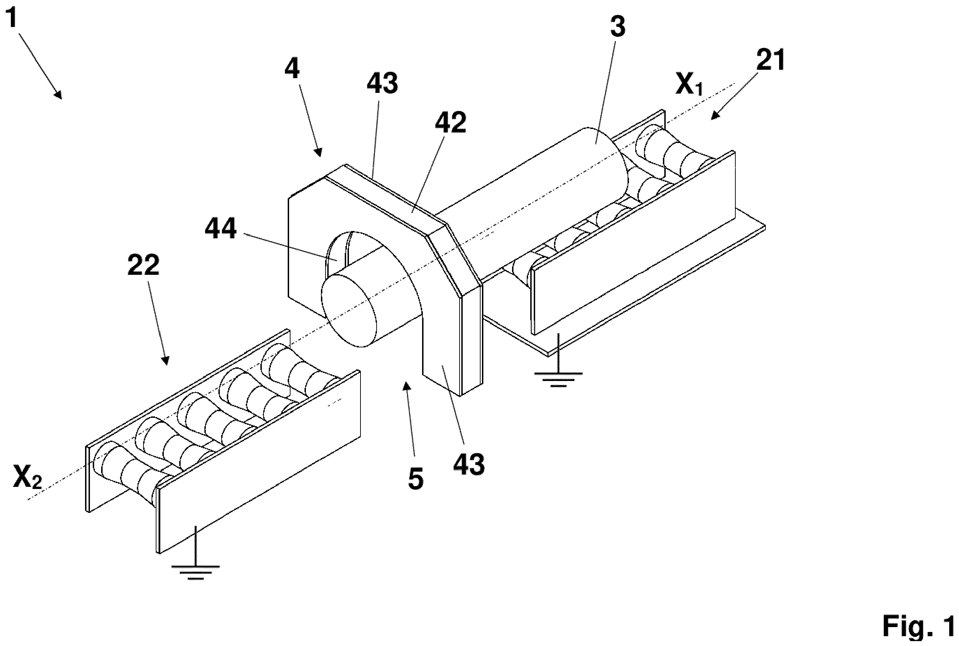

In certain alternative embodiments the lubricating device 1 may comprise a second straight roller conveyor 22 (see Figure 1) and the space 5 is located between the adjacent ends of the two roller conveyors 21, 22.

With the above discussed lubrication device 1, the lubricating powder can be efficiently and quickly deposited on the heated billet, thereby obviating or at least attenuating the problems of the prior art and, in particular, the problems as mentioned above.

In particular, efficient lubrication of the billets affords reduced wear of the extrusion press container, a reduced amount of residual metal inside the extrusion chambers and reduced gas formation inside the extruded metal.

Furthermore, problems during hot extrusion are reduced and the quality of the extruded semi-finished products is improved.

The advantages achieved with the lubricating device 1 are self-evident when the billet 3 is made of a hardly extrudable metal alloy, such as lead-free brass alloys.

In a possible embodiment, the apparatus for creating an air flow containing a powder lubricant is equipped with means for adjusting the flow rate of the air flow containing the powder lubricant and with means for adjusting the amount of powder material per unit volume of air (i.e. adjusting the air/dust ratio).

The ability to adjust the air flow rate and the amount of powder in the air flow prevents excess lubrication.

Excess lubrication of the heated billet 3 may indeed have negative effects on the quality of the extruded product.

While the inventor does not intend to provide a scientific explanation of this, he suggests that excess lubrication of the billet 3 might cause the billet to rotate about its axis inside the extruder container during the extrusion process.

This rotation of the billet about its axis would be the cause of the negative effects on the quality of the extruded product.

The amount of lubricating powder material to be applied per unit surface of the billet varies as a function of the type of lubricating material in use and of the nature of the metal material to be lubricated.

As used herein, a lubricating powder material comprises solid, non-flammable materials with a melting temperature above the temperature to which the billet 3 is heated.

Preferably the lubricating powder material has a melting temperature above 1,000°C.

Thus, the lubricating powder material may be applied to different types of heated non-ferrous metal alloys (including brass).

The average particle size of the lubricating material may range from 10 µm to 100 µm.

It should be noted that the term lubricating powder materials encompasses boron nitride-based materials, in particular based on hexagonal boron nitride (h-BN) and/or based on graphite.

The device 1 as described above may be used in a lubrication process for lubricating a heated metal billet for hot extrusion, which comprises the steps of:
- axially moving a billet 3 through a space 5, while positively maintaining its electric connection to the ground,
- as the billet 3 passes through the space 5, generating a plurality of jets of a mixture of air and electrostatically charged lubricating powder material, wherein said jets substantially and/or essentially converge toward the space 5 through which the billet 3 passes.

Then, the billet 3 so treated can be introduced into the container of an extrusion press for hot extrusion.

This process is carried out using a lubricating material which it is a non-flammable solid material, having a melting temperature above the temperature to which the billet 3 is heated (for brass, the billet 3 may be heated to a temperature of about 680 - 750°C).

Preferably the lubricating powder material has a melting temperature above 1,000°C.

The lubricating powder material may have an average particle size ranging from 10 µm to 100 µm.

The particles of the lubricating powder material may be made of a low electrical conductivity material or may have a coating that has a low electrical conductivity.

In a possible embodiment, the lubricating powder materials is a boron nitride-based lubricant, namely based on hexagonal boron nitride (h-BN).

In a further possible embodiment the lubricating powder material is a graphite-based lubricant.

The jets of air and lubricating powder are being dispensed for the time taken by the billet to pass through the space 5.

In a possible embodiment of the process, the lubricating powder material is dispensed at room temperature.

By way of example, with a brass billet having a length of 2 meters and a diameter of 30 cm, the total amount of lubricating powder material dispensed from the nozzles 41, 41, ..., 41 may be about 6-7 grams.

The time taken by the billet to pass through the space 5 depends on the length of the space.

Indicatively, for a 2 meter-long billet, the time required to travel through the space 5 is approximately 4-8 seconds.

The above described lubrication method namely provides considerable advantages in both indirect hot extrusion processes and direct hot extrusion processes.

For example, the lubrication of the billet 3 was also found to reduce the wear of the press container (intended to receive the billet) and the wear of the die.

The lubrication of the billet achieved by the above discussed device and method was also found to facilitate removal of the metal residues deposited inside the extruder, which must be removed after each extrusion cycle (with a so-called "scraping" operation).

This lubrication was also found to reduce gas formation during hot extrusion.

### Key:

| | |
|---|---|
| 1 | Lubrication device |
| 21 | Roller conveyor |
| 22 | Second roller conveyor |
| 3 | Metal billet |
| 4 | Dispensing head |
| 41, 41, ..., 41 | Nozzles |
| 42 | Nozzle support |
| 43, 43 | Plate-like elements |
| 44 | Slot in the dispensing head |
| 45 | Outer panel |
| 5 | Space |
| 6, 6, ..., 6 | Rollers |
| 71, 71, ..., 71 | Electrodes |
| 8 | Dispensing body |
| 81 | Air and powder inflow duct |
| 82 | Electric cable |
| 9 | Furnace |

## Claims

1. A device (1) for lubricating a heated metal billet (3)
comprising
- an apparatus for generating an air flow containing a powder lubricant,
- a voltage generator,
- a plurality of nozzles (41, 41, ..., 41) pneumatically connected to said apparatus for generating an air flow containing a powder lubricant, each discharge nozzle (41, 41, ..., 41) having an electrode (71, 71, .. 71) associated therewith, which is electrically connected to said voltage generator,
said discharge nozzles (41, 41, ..., 41) being oriented to converge toward a space (5) through which a billet (3) is designed to pass,
said device (1) further comprising a roller conveyor (21) allowing a billet (3) to be axially moved through said space (5), said roller conveyor (21) being electrically connected to the ground.

2. A device as claimed in claim 1, wherein said apparatus adapted to generate an air flow containing a powder lubricant comprises means for adjusting the flow rate of said air flow containing a powder lubricant and means for adjusting the amount of powder material per unit volume of air.

3. A device as claimed in claim 1 or 2, wherein said nozzles (41, 41, ..., 41) are coplanar.

4. A device as claimed in any of the previous claims, wherein said nozzles (41, 41, ..., 41) are of the flat jet type.

5. A device as claimed in any of the previous claims, wherein said discharge nozzles (41, 41, ..., 41) are arranged between two parallel plate-like elements (43, 43) made of a dielectric material, which define a discharge slot (44) extending with an arcuate or annular profile.

6. A device as claimed in any of the preceding claims, comprising a second roller conveyor (22) for moving said billet (3) through said space (5).

7. A device as claimed in any of the previous claims, wherein said electrodes (71, 71, ..., 71) are external to said nozzles (51, 51, ..., 51)

8. A metallurgical plant for hot extrusion of a billet (3) of non-ferrous metal material comprising a device (4) for spraying a mixture of air and an electrostatically charged lubricating powder material on a heated metal billet as claimed in claim 1 or in a claim dependent on claim 1.

9. A method of lubricating a heated billet (3) made of a non-ferrous metal material for hot extrusion, which comprises the steps of
a) axially moving said billet (2) axially through a space (5),
b) maintaining said billet (2) in electric connection to the ground as it is axially moved through said space (5),
c) generating a plurality of jets of a mixture of air and lubricating powder material, said lubricating powder material being a non-flammable material having a melting temperature above the temperature to which said billet (2) is heated,
d) electrostatically charging said lubricating powder material,
e) converging said plurality of jets of a mixture of air and electrostatically charged lubricating powder material toward said space (5) through which said billet (3) moves.

10. A method as claimed in claim 9 wherein said lubricating powder material is a boron nitride-based lubricant, namely based on hexagonal boron nitride (h-BN).

11. A method as claimed in claim 9, wherein said lubricating powder material is graphite-based powder.
